# EUROPÄISCHE PATENTSCHRIFT

(11) **EP 0 602 308 B1**
(45) Veröffentlichungstag und Bekanntmachung des Hinweises auf die Patenterteilung: **28.02.1996**
(21) Anmeldenummer: 93108012.1
(22) Anmeldetag: 17.05.1993
(51) Int. Cl.: B27D 5/00, B23Q 1/25, B23Q 3/155

(54) **Vorrichtung zur Bearbeitung der Kantenränder von fortlaufend bewegten plattenförmigen Werkstücken**
Device for working the side edges of continuously fed panel shaped workpieces
Dispositif pour travailler les côtés de pièces en forme de plaques alimentées de façon continue

(30) Priorität: 18.12.1992 DE 4243054
(43) Veröffentlichungstag der Anmeldung: 22.06.1994
(73) Patentinhaber: HOMAG MASCHINENBAU AG, D-72296 Schopfloch (DE)
(72) Erfinder: Eisele, Klaus, W-7240 Horb-Ihlingne (DE); Kalmbach, Kurt, W-7296 Glatten (DE)
(74) Vertreter: Kohlmann, Karl Friedrich, Dipl.-Ing.

(56) Entgegenhaltungen:
- EP-A- 0 395 996
- DE-C- 2 523 450
- FR-A- 2 457 162
- US-A- 4 787 786
- US-A- 4 991 637

## Beschreibung

Die vorliegende Erfindung betrifft eine Vorrichtung zur Bearbeitung der Kantenränder von fortlaufend bewegten plattenförmigen Werkstücken aus Holz, Kunststoff o. dgl., mittels einer auf den Kantenrand mit mindestens einem rotierenden Werkzeug einwirkenden Werkzeuganordnung, deren Lage zum Kantenrand jeweils durch eine mit der Werkzeuganordnung verbundene, sich am Werkstück abstützende Tastanordnung gesteuert wird, wobei die Werkzeuganordnung an einer Führungsanordnung gehaltert ist, über die die Werkzeuganordnung in einer parallel zur Bewegungsrichtung der Werkstücke und im wesentlichen senkrecht zu deren Ober- bzw. Unterseite verlaufenden Ebene über einen begrenzten Weg verfahrbar ist.

Als Kantenränder werden im vorliegenden Fall diejenigen Schmalflächenbereiche der plattenförmigen Werkstücke verstanden, die sich parallel zur Bewegungsrichtung der Werkstücke erstrecken und den Übergang zwischen der Ober- und Unterseite des Werkstückes bilden.

Der Bearbeitungsvorgang kann grundsätzlich jede beliebige Art der Einwirkung auf die Schmalflächenbereiche, wie beispielsweise Fräsen, Verputzen, Polieren oder jede Art von Nachbearbeitung umfassen. Wesentlich ist dabei, daß die Bearbeitung am fortlaufend bewegten Werkstück, d. h. im Durchlauf, erfolgt.

Bei Vorrichtungen der oben geschilderten gattungsgemäßen Art besteht der Bearbeitungsvorgang meist aus einem Fräsvorgang, mit dem den oben definierten Schmalflächenbereichen über deren gesamte Länge die gewünschte Form gegeben wird. Diese Form kann beispielsweise aus einem einfachen Radius, einer Phase einer bestimmten Profilierung o. dgl. bestehen. Vorrichtungen der gattungsgemäßen Art werden daher in der Praxis häufig als sog. Formfräsgeräte bezeichnet. Bei in einem vorgeschalteten Arbeitsgang angeleimten Kanten wiederum kann die Bearbeitung auch ein sog. Bündigfräsen des Überstandes der Kante über die Ober- bzw. Unterseite der plattenförmigen Werkstücke umfassen.

Eine Vielzahl von Vorrichtungen der eingangs genannten bekannten Art ist ausschließlich in der Lage, den geschilderten Bearbeitungsvorgang entlang der Ober- oder der Unterseite der Werkstücke jeweils in Form eines geraden durchgehenden Schnittes durchzuführen. Zur Bearbeitung der in Bewegungsrichtung vorderen oder hinteren Kantenfläche der Werkstücke werden daher separate Bearbeitungseinheiten vorgesehen, die die Kantenränder in diesem Bereich in die gewünschte Form bringen. Sofern die letzteren nur einfache senkrechte Schnitte durchführen, werden diese in der Praxis als sog. "Kappgeräte" bezeichnet.

Um also im Durchlauf sowohl die Ober- und die Unterseite der Werkstücke, als auch deren vordere und hintere Kantenflächen bearbeiten und damit eine sich über 360° erstreckende Bearbeitung durchführen zu können, müssen in der Praxis zumindest drei, meist sogar vier Bearbeitungsaggregate hintereinander geschaltet werden, wodurch sich zwangsläufig lange Bearbeitungsstrecken ergeben, zu deren Realisierung große Maschinenlängen für die Durchlaufmaschinen notwendig sind.

Es sind auch bereits Vorrichtungen der eingangs geschilderten Art bekannt, die nicht nur die oben erwähnten geraden durchgehenden Schnitte entlang der Ober- oder Unterseite der Werkstücke durchführen, sondern zusätzlich entweder zu dem jeweiligen Schnitt die in Bewegungsrichtung vordere oder die hintere Kantenfläche oder auch beide Kantenflächen mit in die Bearbeitung einbeziehen.

Eine Vorrichtung dieser Art ist beispielsweise in der DE-25 23 450 beschrieben. Die Bearbeitung der vorderen oder hinteren Kantenflächen ist bei derartigen Vorrichtungen jedoch auf bestimmte einfache Formen, wie beispielsweise einem Radius als Übergang von der Ober- oder Unterseite auf die vordere oder hintere Kantenfläche beschränkt. Werkstücke mit komplizierteren oder sog. Softforming-Vorder- oder Hinterkanten können mit derartigen Vorrichtungen nicht bearbeitet werden. Hierfür ist die Anordnung weiterer, jeweils vor- oder nachgeschalteter Bearbeitungsaggregate erforderlich, so daß ebenfalls große Maschinenlängen notwendig sind.

Es sind auch bereits Vorrichtungen bekannt (vgl. DE-GBM 90 13 430), die in der Lage sind, die Kantenränder von Werkstücken sowohl entlang der Ober- und der Unterseite als auch im Bereich der Vorder- oder Hinterkante in einem Arbeitsgang auch bei Softforming-Werkstücken durchzuführen, d.h. eine sich über 360° erstreckende Bearbeitung ermöglichen. Bei derartigen Vorrichtungen muß jedoch die die Durchlaufbewegung der Werkstücke bewerkstelligende Transporteinrichtung im Verlaufe des Bearbeitungsvorganges umgesteuert, d.h. die fortlaufende Bewegung der Werkstücke in Durchlaufrichtung gestoppt, eine Rücklaufbewegung eingeleitet, diese nach einer bestimmten Strecke erneut gestoppt und die Bewegung in der ursprünglichen Durchlaufrichtung wieder hergestellt werden. Ein derartiger Bewegungsablauf ist jedoch in Durchlaufmaschinen mit einer Vielzahl von entlang der Bearbeitungsstrecke angeordneten Bearbeitungsaggregaten nicht realisierbar und reduziert bei Anwendung in Einzelbearbeitungsmaschinen zwangsläufig den Durchsatz.

Die Führungsanordnung zum Verfahren der Werkzeuganordnung in der eingangs definierten Ebene ist bei Vorrichtungen der bekannten Art in verschiedenster Weise gestaltet.

So sind Führungsanordnungen bekannt, die aus einer parallel und aus einer senkrecht zur Bewegungsrichtung der Werkstücke ausgerichteten Geradführung bestehen (vgl. beispielsweise DE-GBM 90 13 430).

Ferner sind Führungsanordnungen bekannt, bei denen die Werkzeuganordnungen jeweils am freien Ende eines mit seinem anderen Ende ortsfest angelenkten Hebels befestigt, d.h. nach Art einer Pendelanordnung ausgebildet sind (vgl. beispielsweise DE-25 23 450).

Darüber hinaus werden für Formfräsgeräte Führungsanordnungen eingesetzt, die aus einer Drehführung, kombiniert mit einem innerhalb dieser angeordneten Geradführung bestehen (vgl. EP 0 395 996).

Aufgabe der vorliegenden Erfindung ist es, eine Vorrichtung zur Bearbeitung der Kantenränder von fortlaufend bewegten plattenförmigen Werkstücken zu schaffen, die eine vollkommen neuartige Führungsanordnung aufweist, mit welcher mit geringem konstruktiven und insbesondere steuerungstechnischem Aufwand Bewegungsabläufe für die Werkzeuganordnung realisierbar sind, die auch komplexe Bearbeitungsvorgänge verschiedenster Art und insbesondere eine sich über mehr als 180° erstreckende Bearbeitung zuläßt.

Diese Aufgabe wird erfindungsgemäß dadurch gelöst, daß die Führungsanordnung eine erste Linearführung umfaßt, deren Führungsrichtung schräg zur Bewegungsrichtung der Werkstücke verläuft, und daß die erste Linearführung an einer zweiten Linearführung parallel verfahrbar ist, deren Führungsrichtung die Führungsrichtung der ersten Linearführung kreuzt und in bezug auf die Führungsrichtung der ersten Führungsanordnung entgegengesetzt schräg zur Bewegungsrichtung der Werkstücke verläuft.

Führungsanordnungen mit schräg zur Bewegungsrichtung der Werkstücke verlaufender Linearführung sind bei sog. Kappgeräten bereits bekannt (vgl. beispielsweise DE-21 19 388). Erfindungsgemäß wird jedoch eine derartige schräg verlaufende Linearführung in Kombination mit einer in besonderer Weise zu dieser angeordneten und mit dieser zusammenwirkenden weiteren, entgegengesetzt schräg verlaufenden Geradführung bei einem sog. Formfräsgerät eingesetzt. Durch diese spezielle Anwendung und Kombination werden in überraschender Weise eine Vielfalt von Bearbeitungsmöglichkeiten und komplexe Bearbeitungsvorgänge realisierbar. Überraschend ist dabei, daß diese Bearbeitungsvielfalt mit einem relativ einfachen und störunanfälligen konstruktiven Aufbau möglich ist. Darüber hinaus ist der Steuerungsaufwand relativ gering, da die verschiedenen Bewegungen des bzw. der rotierenden Werkzeuge in der im Oberbegriff des Patentanspruches 1 angegebenen Verfahrebene über die Tastanordnung direkt in an sich bekannter Weise von der Werkstückbewegung abgeleitet werden, wobei dabei auf bei Kapp- und Formfräsgeräten bereits bewährte Techniken und Mittel zurückgegriffen werden kann. Führungsanordnungen der erfindungsgemäßen Art eignen sich daher insbesondere für Vorrichtungen, bei denen die Tastanordnung zwei mit der Werkzeuganordnung verbundene Tastelemente aufweist, von denen sich das eine Tastelement auf der seitlichen Kantenfläche und das andere Tastelement auf der Oberseite, der Unterseite bzw. der in Bewegungsrichtung vorderen oder hinteren Kantenfläche des jeweiligen plattenförmigen Werkstückes abstützt.

Von besonderer Bedeutung ist dabei, daß durch das Zusammenwirken der gekreuzten und schräg verlaufenden Geradführungen Führungsbahnen für das bzw. die rotierenden Werkzeuge reaisierbar sind, die eine sich über mehr als 180° erstreckende Bearbeitung der Werkstücke ermöglichen, wodurch das bisher für derartige Bearbeitungsvorgänge notwendige aufeinanderfolgende Anordnen einer Anzahl von Bearbeitungsaggregaten entfällt. Dadurch können selbst komplexe Bearbeitungsvorgänge an Kantenrändern von fortlaufend bewegten Werkstücken über eine kürzere Strecke durchgeführt werden, wodurch die Maschinenlängen von Durchlaufmaschinen erheblich reduziert werden können. Die Reduzierung der Maschinenlängen wiederum erbringt Kosten- und Investitionsvorteile.

Aufgrund der Schrägführungen ergeben sich auch sicherheitstechnische Vorteile. So können sich die Werkzeuganordnungen bei entsprechender Ausgestaltung und Anordnung im Falle von Störungen beim Durchlauf besser "freifahren", da keine senkrecht zur Durchlaufrichtung verlaufenden und deshalb eine Blockiergefahr darstellenden Führungswege vorhanden sind.

Um die Verfahrbarkeit der Werkzeuganordnung entlang der beiden Linearführungen präzise steuern und deren Lage auf den beiden Linearführungen genau positionieren zu können, ist es vorteilhaft, lösbare Blockiereinrichtungen sowie Stelleinrichtungen vorzusehen. Bei diesen Einrichtungen kann weitgehend auf bekannte und bewährte Techniken zurückgegriffen werden.

Die Wahl der Schrägungswinkel der ersten und der zweiten Linearführung gegenüber der Bewegungsrichtung der Werkstücke hängt von einer Reihe von Parametern, wie beispielsweise der Art des Bearbeitungsvorganges, der Bearbeitungsgeschwindigkeit u. dgl., ab. Versuche haben nun ergeben, daß optimale Schrägungswinkel etwa zwischen 10° und 60° betragen. Vorteilhaft ist es, Schrägungswinkel zwischen 20° und 50° zu wählen.

Für plattenförmige Werkstücke auf dem Gebiet des Möbel- oder Küchenbaus haben sich in Versuchen Schrägungswinkel um etwa 30° bzw. 45° bewährt.

Vorteilhaft ist es, wenn die Anordnung derart getroffen wird, daß die Schrägungswinkel der ersten und der zweiten Linearführung in der erfindungsgemäßen Überkreuzanordnung bezogen auf die Bewegungsebene der Werkstücke gleich sind.

Grundsätzlich können die Linearführungen in der verschiedensten Weise ausgebildet sein. Vorteilhaft ist es jedoch, wenn die erste Linearführung eine erste Führungsschiene aufweist, an deren einem Ende die Werkzeuganordnung befestigt und bei der die erste Führungsschiene in einem Schienenschlitten hin- und herverschiebbar gelagert ist. Bei einer derartigen Anordnung ist es vorteilhaft, wenn die zweite Linearführung eine zweite Führungsschiene aufweist, auf der der Schienenschlitten zusammen mit der ersten Führungsschiene in Parallelausrichtung hin- und herverschiebbar gelagert ist. Eine derartige Anordnung besitzt einen technisch einfachen und störunanfälligen Aufbau und ist für die verschiedensten Werkzeuganordnungen geeignet.

Wie eingangs bereits erwähnt, eignen sich Vorrichtungen der erfindungsgemäßen Art sogar für Bearbeitungsvorgänge, in denen sich die Bearbeitung über mehr als 180° erstreckt. Da bei derartigen Bearbeitungsvorgängen die Werkzeuganordnung in bestimmten Phasen, sich kurzfristig über einen bestimmten Weg in Werkstückdurchlaufrichtung schneller bewegen muß als das Werkstück, ist es gemäß einer besonderen Weiterentwicklung der Erfindung vorteilhaft, die Führungsanordnung mit einer dritten Linearführung auszustatten, über die die zweite Linearführung in Parallelausrichtung über einen begrenzten Verschiebeweg in einer zur Bewegungsrichtung der Werkstücke parallelen Richtung verschiebbar ist. Durch diese dritte Linearführung ist es möglich, die Werkzeuganordnung über einen begrenzten Weg derart zu beschleunigen, daß ihre Geschwindigkeit in Durchlaufrichtung der Werkstücke größer ist als die Werkstückgeschwindigkeit. Aufgrund dieser Fähigkeit kann die Werkzeuganordnung das fortlaufend in einer Richtung bewegte Werkstück umfahren, d. h ohne eine Umsteuerung der Bewegungsrichtung, um 270° oder auch 360° um das Werkstück herumgeführt werden, wodurch die Vor- oder Nachschaltung von zusätzlichen Bearbeitungsaggregaten entfallen und damit die Maschinenlänge reduziert werden kann.

Um das oben beschriebene Ziel der kurzfristigen Erhöhung der Geschwindigkeit der Werkzeuganordnung über die Geschwindigkeit des Werkstückes hinaus zu erreichen, kann die dritte Linearführung auch zwischen der Werkzeuganordnung und der ersten Linearführung oder an einer anderen Stelle des Systems angeordnet sein. Wesentlich ist lediglich, daß mit dieser dritten Linearführung die Werkzeuganordnung zusätzlich über einen begrenzten Verschiebeweg in einer zur Bewegungsrichtung der Werkstücke parallelen Richtung verschiebbar ist.

Grundsätzlich können die Tastelemente in der verschiedensten Weise ausgebildet sein. In besonderer Weise eignen sich Tastscheiben, Tastschuhe o.dgl., wie sie auch bei Kapp- und Formfräsgeräten der bekannten Art bereits im Einsatz sind. Bei einer Werkzeuganordnung mit einem rotierenden Werkzeug ist es jedoch vorteilhaft, das sich auf der Oberseite, der Unterseite bzw. auf der in Bewegungsrichtung vorderen oder hinteren Kantenfläche des jeweiligen plattenförmigen Werkstückes abstützende Tastelement als Tastscheibe auszubilden, die achsgleich mit der Werkzeugachse dicht neben dem rotierenden Werkzeug angeordnet ist.

Dem jeweiligen Bearbeitungswerkzeug entsprechend kann die Werkzeuganordnung in beliebiger Weise ausgebildet sein. Sie kann als Fräs-, Schleif-, Polier-, Nachbearbeitungseinheit o. dgl. ausgebildet sein. Für bestimmte Bearbeitungsvorgänge kann es dabei zweckmäßig sein, die Werkzeuganordnung als das bzw. die Werkzeuge tragender Schwenkkopf auszubilden, der um eine senkrecht zur Bewegungsrichtung der Werkstücke und parallel zu der Ober- bzw. Unterseite verlaufenden Drehachse schwenkbar ist.

Beim Einsatz eines rotierenden Werkzeuges in Form eines Fräsers o.dgl. ist es zweckmäßig, die Drehachse des Schwenkkopfes gegebenenfalls in die Achse des rotierenden Werkzeuges zu legen.

Ein derartiger Schwenkkopf hat den Vorteil, daß das jeweilige Werkzeug in jeder Phase des Bearbeitungsvorganges jeweils in die optimale Bearbeitungsstellung gegenüber dem Werkstück geschwenkt werden kann. So muß bei rotierenden Werkzeugen, wie beispielsweise bei einem Fräser, nach jedem Nachschärfvorgang das Tastelement auf den neuen Durchmesser des Fräsers eingestellt werden. Bei einer Werkzeuganordnung mit Tastscheibe muß deshalb die Tastscheibe nach dem Nachschärfvorgang gegen eine mit einem entsprechenden kleineren Durchmesser ausgestattete Tastscheibe ausgetauscht werden. Im Falle des Einsatzes eines Schwenkkopfes kann dieser Auswechselvorgang der Tastscheibe entfallen, da der Fräser stets nur in einem begrenzten, stets gleichen Umfangsbereich von wenigen Winkelgraden mit dem Werkstück in Verbindung kommt, so daß nur ein Nachstellen der Tastscheibe erforderlich ist.

Beim Einsatz eines Schwenkkopfes ist es erforderlich, dessen Schwenkbewegung entsprechend der gewünschten Stellung zu steuern. Dies kann mit beliebigen elektrischen, pneumatischen, hydraulischen oder mechanischen Mitteln erfolgen. Eine besonders einfache mechanische Steuerung eines derartigen Schwenkkopfes wird mit einem Vortastelement erreicht, das am Schwenkkopf befestigt ist, und das sich im Abstand von dem eigentlichen, die Schnittiefe bestimmenden Tastelement auf der Oberseite, der Unterseite bzw. der in Bewegungsrichtung vorderen oder hinteren Kantenfläche des jeweiligen plattenförmigen Werkstückes abstützt und auf diese Weise den Schwenkkopf bei der Entlangbewegung am Werkstück in die jeweils optimale Lage schwenkt.

Der jeweiligen Kanten- bzw. Werkstückform entsprechend kann das Vortastelement in verschiedenster Weise ausgebildet sein. Vorteilhaft ist es in aller Regel, wenn das Vortastelement als Vortastrolle ausgebildet ist.

Um den Schwenkkopf über das Vortastelement in Anlage an der abzutastenden Werkstückoberfläche zu halten, ist es vorteilhaft, wenn der Schwenkkopf mit einer Dreheinrichtung ausgestattet ist, die den Schwenkkopf in Anlagerichtung des Vortastelementes stets mit einer bestimmten Kraft "vorspannt". Derartige Dreheinrichtungen können in verschiedenster Weise ausgebildet sein. Besonders gut eignen sich hierzu Pneumatikmotoren oder E-Motoren mit Rutschkupplung.

Bei der kommissionsweisen Fertigung von fortlaufend bewegten plattenförmigen Werkstücken müssen mit ein und derselben Vorrichtung in häufig sehr kurzen Abständen unterschiedliche Bearbeitungsvorgänge ausgeführt werden. Für solche Fälle ist es zweckmäßig, wenn die Werkzeuganordnung eine das bzw. die rotierenden Werkzeuge tragenden Wechseleinheit aufweist, die über eine Schnellwechselanordnung an der Werkzeuganordnung lösbar befestigt ist. Mit einer derartigen Anordnung können die rotierenden Werkzeuge entweder manuell oder automatisch sehr schnell und auf einfache Weise ausgewechselt werden.

Die Wechseleinheit kann in jeder beliebigen Weise gestaltet sein. Gemäß einer vorteilhaften Ausführungsform trägt die Wechseleinheit neben dem Werkzeug noch die Werkzeuglagerung, die Tastanordnung sowie ein Kupplungselement für den Werkzeugantrieb. Mit derartigen Wechseleinheiten ist ein besonders einfacher und schneller Wechselvorgang möglich.

Wie bereits erwähnt, ist es für verschiedene Arbeitsgänge notwendig, daß das rotierende Werkzeug, wie beispielsweise ein Fräser o.dgl., in einem Schwenkkopf gelagert ist. Sofern eine erfindungsgemäße Vorrichtung mit einer Auswechseleinrichtung ausgestattet ist, ist es erforderlich, daß der Schwenkkopf an der Wechseleinheit angeordnet wird. In einem solchen Fall ist es zweckmäßig, den Schwenkkopf mit der Dreheinrichtung über eine Übertragungseinrichtung zu verbinden. Um bei einer derartigen Ausführung ein schnelles und einfaches Auswechseln zu ermöglichen, ist es vorteilhaft, die Übertragungseinrichtung mit einer Kupplungseinrichtung auszustatten, die zweckmäßigerweise in der Schnittstelle für das Kupplungselement für den Werkzeugantrieb liegt. Eine derartige Anordnung eignet sich sowohl zum Einsatz an Auswechseleinrichtungen in Form von Wechselscheiben als auch für Auswechseleinrichtungen in Form von Umlaufmagazinen, Paternostermagazinen, Roboteranordnungen u.dgl., wie sie im folgenden noch erwähnt werden.

Sofern eine Vielzahl von Auswechselvorgängen für die Werkzeuge erforderlich sein sollte, ist es vorteilhaft, an der Vorrichtung eine komplette Auswechseleinrichtung zum automatischen Auswechseln der Wechseleinheiten vorzusehen.

Grundsätzlich kann die Auswechseleinrichtung in jeder beliebigen Weise gestaltet sein. So ist es möglich, die Auswechseleinrichtung dem jeweiligen Einsatzzweck entsprechend als Umlaufmagazin, Paternostermagazin, in Form einer Roboteranordnung o.dgl. auszubilden. Sofern es lediglich erforderlich ist, eine kleinere Anzahl von Wechseleinheiten auszuwechseln, ist es zweckmäßig, die Auswechseleinrichtung als Wechselscheibe auszubilden, die an ihrem Umfang sternförmig angeordnet die betreffende Anzahl von Wechseleinheiten trägt, die über eine an sich bekannte Schrittschaltung wahlweise einzeln in eine Bearbeitungsstellung schwenkbar sind.

Grundsätzlich kann die Wechselscheibe in jeder beliebigen Weise ausgebildet sein. Eine besonders platzsparende Anordnung ergibt sich jedoch, wenn die Drehachse mit der Durchlaufebene einen spitzen Winkel einschließt.

Gemäß einer vorteilhaften Weiterbildung der vorliegenden Erfindung kann an zumindest einer der Linearführungen eine weitere Werkzeuganordnung hin- und herverfahrbar gelagert werden. Dadurch können Vor- oder Nachbearbeitungsvorgänge, z. B. eine auf bestimmte Bereiche beschränkte Finishbearbeitung, weitgehend innerhalb des Raumbedarfes der erfindungsgemäßen Vorrichtung zusätzlich zum eigentlichen Bearbeitungsvorgang vorgenommen werden. In solchen Fällen hat die jeweilige Linearführung eine Doppelfunktion. Um eine optimale Anordnung der weiteren Werkzeuganordnung innerhalb des Systemes zu gewährleisten, kann es dabei zweckmäßig sein, die jeweilige Linearführung zu verlängern.

Sofern plattenförmige Werkstücke mit unterschiedlicher Dicke bearbeitet werden müssen, ist es erforderlich, eine Tasteinrichtung zur Dickenabtastung vorzusehen. Diese Abtasteinrichtung kann in verschiedenster Weise ausgebildet sein und sich bewährter Mittel bedienen. Bei sog. Durchlaufmaschinen wird das fortlaufend bewegte plattenförmige Werkstück auf der Transportkette mittels eines sog. "Oberdruckes" gehalten. Dieser "Oberdruck" ist druckbeaufschlagt und paßt sich über eine Verstelleinrichtung der jeweiligen Werkstückdicke an. Vorteilhaft ist es deshalb, wenn diejenigen Teile der Vorrichtung, die auf die Dicke des jeweils zu bearbeitenden Werkstückes eingestellt werden müssen, mit dem sog. "Oberdruck" der Durchlaufmaschine in Verbindung stehen.

Im folgenden sind zur weiteren Erläuterung und zum besseren Verständnis der Erfindung drei Ausführungsbeispiele unter Bezugnahme auf die beigefügten Zeichnungen näher beschrieben und erläutert.
- Fig. 1 und 2: zeigen schematisch jeweils in einer Seitenansicht, teilweise abgebrochen, ein erstes Ausführungsbeispiel einer erfindungsgemäßen Vorrichtung mit einer eine erste und eine zweite Linearführung aufweisenden Führungsanordnung, in zwei Arbeitsphasen,
- Fig. 3 bis 11: zeigen schematisch in einer vereinfachten Seitenansicht ein zweites Ausführungsbeispiel einer erfindungsgemäßen Vorrichtung mit einer eine erste, eine zweite und eine dritte Linearführung aufweisenden Führungsanordnung, in verschiedenen Arbeitsphasen,
- Fig. 12 bis 15: zeigen in einer vergrößerten Darstellung jeweils eine Werkzeuganordnung in vier verschiedenen Arbeitsphasen, die etwa den Arbeitsphasen entsprechen, die in den Fig. 3, 4, 6 und 7 dargestellt sind, und
- Fig. 16: zeigt schematisch in einer vereinfachten Seitenansicht ein drittes Ausführungsbeispiel einer erfindungsgemäßen Vorrichtung mit einer Auswechseleinrichtung in Form einer Wechselscheibe.

Die Bearbeitung von fortlaufend bewegten plattenförmigen Werkstücken erfolgt in sog. Durchlaufmaschinen. Derartige Durchlaufmaschinen sind mit einer Fördereinrichtung ausgestattet, mit der die plattenförmigen Werkstücke an einer Anzahl von Bearbeitungsaggregaten vorbeibewegt werden. Eines dieser Bearbeitungsaggregate stellt die erfindungsgemäße Vorrichtung dar.

Die Fördereinrichtung derartiger Durchlaufmaschinen umfaßt üblicherweise ein Förderband 1, das als Platten- oder Kettenförderer ausgebildet ist. Auf der Oberseite des Förderbandes 1 liegt das Werkstück 2 auf, welche über einen Förderriemen 3 auf das Förderband gedrückt wird. Förderband 1 und Förderriemen 3 werden mit derselben Geschwindigkeit angetrieben und halten das Werkstück 2 beim Transport durch die Durchlaufmaschine in einer genau fixierten Lage.

Der Förderriemen 3 wird über Druckrollensätze 4 an einem sog. Oberdruck 5 gehalten, der entsprechend der Dicke des zu bearbeitenden Werkstückes in vertikaler Richtung verfahren werden kann. Derartige Anordnungen sind bekannt und stellen eine bewährte Technik dar.

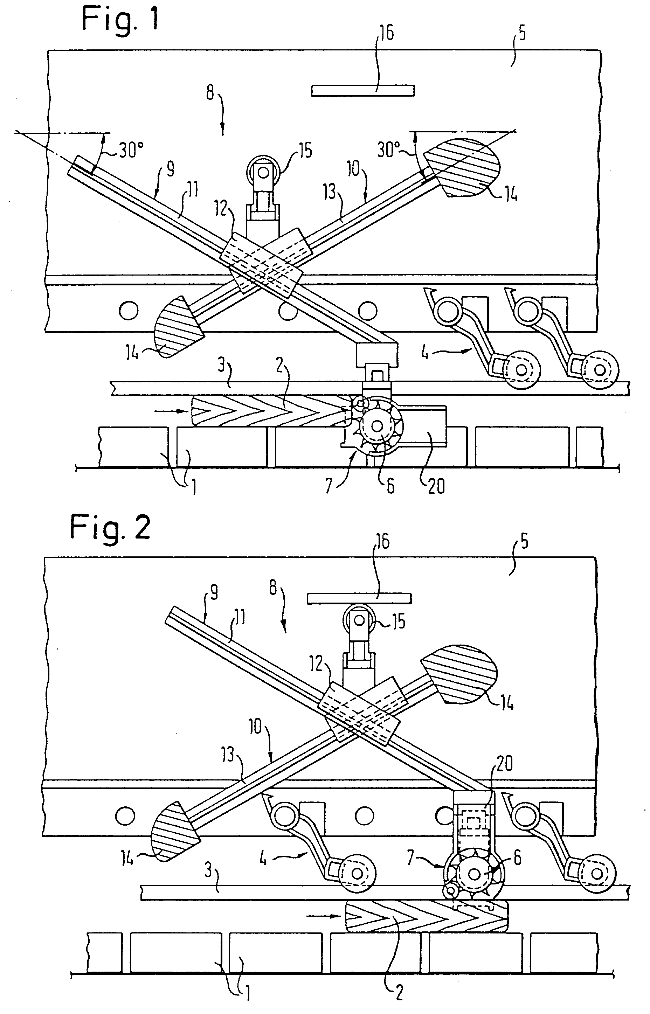

Bei dem in den Fig. 1 und 2 dargestellten ersten Ausführungsbeispiel einer erfindungsgemäßen Vorrichtung wirkt ein rotierendes Werkzeug 6 in Form eines Fräsers auf den zu bearbeitenden Kantenrand des Werkstückes 2 ein. Dieses rotierende Werkzeug 6 ist Teil einer Werkzeuganordnung 7, die einen Antrieb für das rotierende Werkzeug 6 sowie eine nicht im einzelnen dargestellte Tastanordnung trägt, mit der sie sich in an sich bekannter Weise am Werkstück abstützt. Im Falle eines rotierenden Werkzeuges in Form eines Fräsers besteht die Tastanordnung aus zwei Tastelementen, von denen sich das eine Tastelement auf der seitlichen Kantenfläche und das andere Tastelement je nach Bearbeitungsphase auf der Oberseite, der Unterseite bzw. der in Bewegungsrichtung vorderen oder hinteren Kantenfläche des jeweils zu bearbeitenden plattenförmigen Werkstückes 2 abstützt. Derartige Tastanordnungen und Tastelemente sind bekannt und stellen ebenfalls eine bewährte Technik dar.

Die Werkzeuganordnung 7 wiederum ist an einer Führungsanordnung 8 befestigt, die im vorliegenden ersten Ausführungsbeispiel aus einer ersten Linearführung 9 und einer zweiten Linearführung 10 besteht, die zueinander nach Art einer Kreuzanordnung angeordnet sind, wobei die Führungsrichtung der beiden Linearführungen 9 und 10 jeweils in einem Winkel schräg zur Bewegungsrichtung des Werkstückes 2 verläuft.

In dem in den Fig. 1 und 2 dargestellten Ausführungsbeispiel beträgt der Winkel der Führungsrichtung sowohl der ersten Linearführung 9 als auch der zweiten Linearführung 10 im Bezug auf die Bewegungsrichtung des Werkstückes 2 jeweils 30°.

Die erste Linearführung 9 umfaßt eine erste Führungsschiene 11, an deren freien Ende die Werkzeuganordnung 7 befestigt ist. Die erste Führungsschiene 11 ist in einem Schienenschlitten 12 in der oben beschriebenen Führungsrichtung hin- und herverschiebbar gelagert. Der Schienenschlitten 12 wiederum ist seinerseits an einer zweiten Führungsschiene 13 hin- und herverschiebbar, die die zweite Linearführung 10 bildet. Aufgrund dieser Anordnung ist die erste Führungsschiene 11 zusammen mit der Werkzeuganordnung 7 über den Schienenschlitten 12 in Parallelanordnung an der zweiten Führungsschiene 13 der zweiten Linearführung 10 hin- und herverschiebbar.

Bei dem in den Fig. 1 und 2 dargestellten ersten Ausführungsbeispiel ist die zweite Führungsschiene 13 der zweiten Linearführung 10 am Maschinengestell nicht am Oberdruck 5 der Durchlaufmaschine befestigt, wie dies durch Lagerböcke 14 angedeutet ist.

Der Schienenschlitten 12 besitzt auf seiner Oberseite einen Höhenanschlag 15, der - wie später noch beschrieben werden wird - mit einer Anschlagleiste 16 am Oberdruck 5 zusammenwirkt.

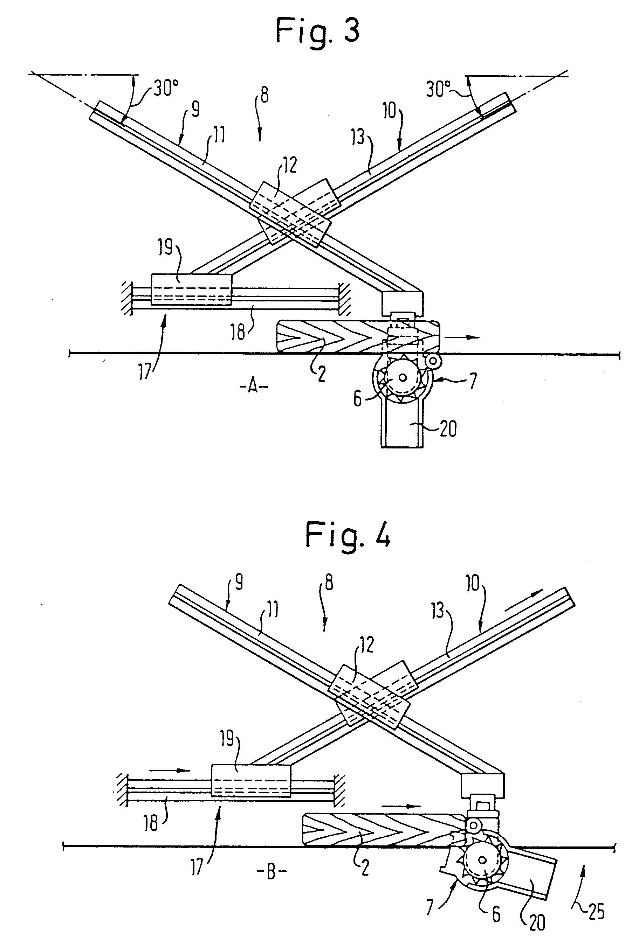

Bei dem in den Fig. 3 bis 11 dargestellten zweiten Ausführungsbeispiel einer erfindungsgemäßen Vorrichtung ist die Führungsanordnung 8 nicht nur mit einer ersten Linearführung 9 und einer zweiten Linearführung 10, sondern darüber hinaus noch mit einer dritten Linearführung 17 ausgestattet. Diese dritte Linearführung 17 umfaßt eine dritte Führungsschiene 18, die parallel zur Durchlaufrichtung des Werkstückes 2 ortsfest am Maschinengestell befestigt ist und über einen Schlitten 19 die zweite Führungsschiene 13 der zweiten Linearführung 10 trägt.

Im Gegensatz zu dem in den Fig. 1 und 2 dargestellten ersten Ausführungsbeispiel ist somit die zweite Führungsschiene 13 der zweiten Linearführung 10 nicht ortsfest am Maschinengestell befestigt, sondern in Parallelausrichtung über die dritte Linearführung 17 parallel zur Bewegungsrichtung des Werkstückes 2 hin- und herverfahrbar.

Die erste, die zweite und die dritte Linearführung sind jeweils mit nicht dargestellten Blockiereinrichtungen ausgestattet, über die Verfahrbarkeit der Werkzeuganordnung 7 entlang der Linearführungen feststellbar und wieder freigebbar ist. Die drei Linearführungen sind ferner mit nicht dargestellten Stelleinrichtungen ausgestattet, über die die Werkzeuganordnung über die Linearführungen in vorwählbare Positionen stellbar und entlang vorgebbaren Wegen mit vorgebbarer Geschwindigkeit bewegbar ist.

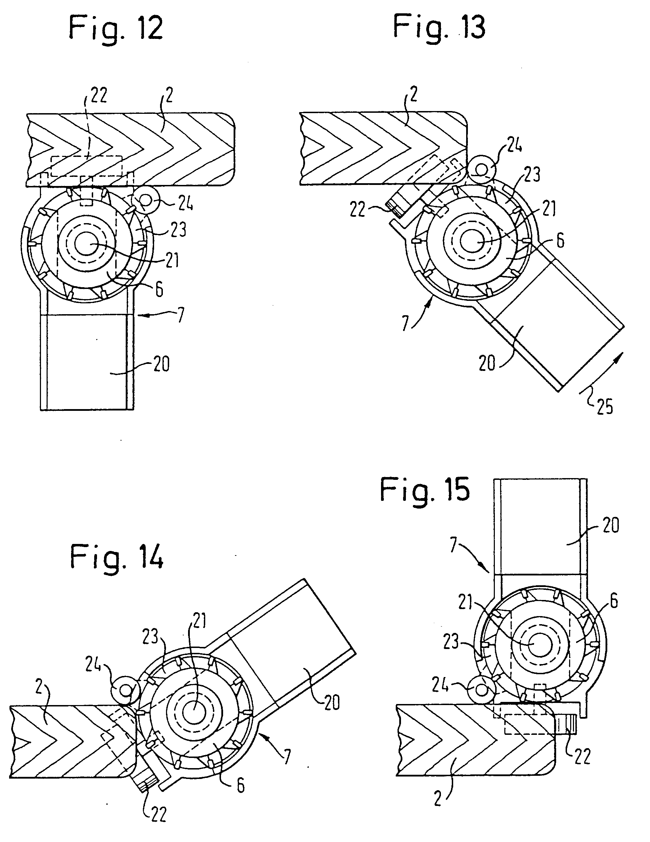

Wie aus den Fig. 12 bis 15 hervorgeht, ist die Werkzeuganordnung 7 als das rotierende Werkzeug 6 tragender Schwenkkopf 20 ausgebildet, der um eine senkrecht zur Bewegungsrichtung des Werkstückes 2 und parallel zu dessen Ober- bzw. Unterseite verlaufende Drehachse 21 schwenkbar ist. Im vorliegenden Ausführungsbeispiel fällt die Drehachse 21 des Schwenkkopfes 20 mit der Achse des rotierenden Werkzeuges 6 zusammen.

Der Schwenkkopf 20 trägt darüber hinaus eine Tastanordnung, die im vorliegenden Ausführungsbeispiel insgesamt drei Tastelemente aufweist. Ein Tastelement 22 ist als Tastrolle mit senkrecht zur Schwenkachse 21 angeordnete Drehachse ausgebildet, welche sich auf der seitlichen Kantenfläche des Werkstückes 2 abstützt. Das andere Tastelement 23 ist im vorliegenden Ausführungsbeispiel als Tastscheibe ausgebildet, die achsgleich dicht neben dem rotierenden Werkzeug angeordnet ist und sich im Verlaufe des Bearbeitungsvorganges - wie später noch beschrieben werden wird - auf der Oberseite, der Unterseite bzw. der in Bewegungsrichtung vorderen oder hinteren Kantenfläche des jeweiligen plattenförmigen Werkstückes abstützt.

Das dritte Tastelement ist im vorliegenden Ausführungsbeispiel als Vortastelement 24 in Form einer im Abstand zur Tastscheibe angeordneten Vortastrolle ausgebildet, die sich wie die Tastscheibe ebenfalls auf der Oberseite, der Unterseite bzw. der in Bewegungsrichtung vorderen oder hinteren Kantenfläche des Werkstückes 2 abstützt.

Der Schwenkkopf 20 ist darüber hinaus mit einer nicht dargestellten Dreheinrichtung ausgestattet, mit der das Vortastelement 24 in Form der Vortastrolle beim Bearbeitungsvorgang jeweils in Anlage an der Oberseite, der Unterseite bzw. der in Bewegungsrichtung vorderen oder hinteren Kantenfläche des Werkstückes 2 in Anlage gehalten wird.

Die Fig. 12 bis 15 zeigen in vier Arbeitsphasen die jeweilige Stellung des das rotierende Werkzeug 6 tragenden Schwenkkopfes 20, wobei in jeder der vier Arbeitsphasen alle drei Tastelemente (22, 23 und 24) am Werkstück anliegen, so daß das rotierende Werkzeug 6 in Form des Fräsers in einer durch die Tastelemente genau definierten Stellung um die in den Fig .12 bis 15 gezeigte vordere Kantenfläche des Werkstückes 2 herumgeführt werden kann.

Die Arbeitsweise der erfindungsgemäßen Vorrichtung wird nun im folgenden anhand des in den Fig. 3 bis 11 dargestellten zweiten Ausführungsbeispiels mit drei Linearführungen anhand von Arbeitsphasen A bis I beschrieben und erläutert:

In der in Fig. 3 dargestellten Arbeitsphase A ist die Werkzeuganordnung 7 durch die nicht dargestellten Stelleinrichtungen über die drei Linearführungen in eine Ausgangsstellung gestellt worden, in der das rotierende Werkzeug 6 seinen Bearbeitungsvorgang an der Unterseite des Werkstückes 2 nahe der in Bewegungsrichtung vorderen Kantenfläche des Werkstückes 2 beginnen kann. Die Linearführungen sind in dieser Stellung über die Blockiereinrichtungen festgesetzt.

Das sich in Fig. 3 von links der Werkzeuganordnung 7 nähernde und diese bis in die dargestellte Stellung überfahrende Werkstück 2 gelangt in dieser Phase in Anlage an einen nicht dargestellten Anschlag, über den die Werkzeuganordnung 7 in Bewegungsrichtung des Werkstückes mitgenommen wird. Vom Zeitpunkt der Anlage der Werkzeuganordnung an dem nicht dargestellten Anschlag werden die dritte Linearführung 17 und die zweite Linearführung 10 freigegeben, so daß sich die Werkzeuganordnung 7 aus der in Fig. 3 dargestellten Arbeitsphase A in die in Fig. 4 dargestellte Arbeitsphase B bewegen kann. Die erste Linearführung 9 ist in dieser Arbeitsphase durch die Blockiereinrichtung festgestellt.

Im Verlaufe des Weges von der Arbeitsphase A in die Arbeitsphase B bearbeitet das rotierende Werkzeug 6 die Unterseite des Werkstückes 6 in der Nähe des Kantenrandes bis in den Bereich der vorderen Kantenfläche hinein. Im Verlaufe dieser Bewegung wird der Schwenkkopf 20 über die Dreheinrichtung in der im Zusammenhang mit den Fig. 12 bis 15 beschriebenen Weise in Richtung des Pfeiles 25 geschwenkt.

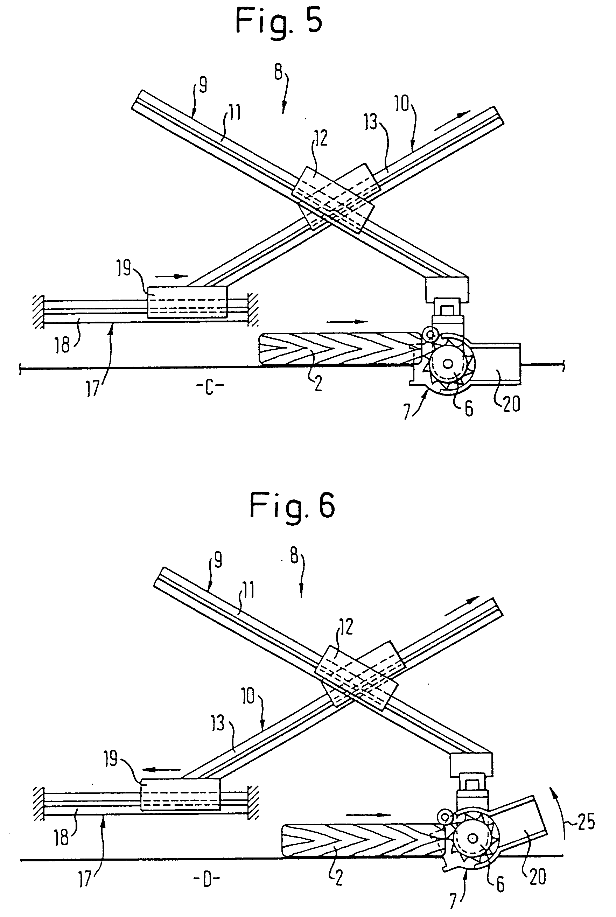

Im Verlaufe der weiteren Bewegung des Werkstückes wird das rotierende Werkzeug 6 dann über den Schwenkkopf 20 an der vorderen Kantenfläche von unten nach oben entlanggeführt,wie dies in den Fig. 5 und 6 dargestellt ist. Dabei schwenkt der Schwenkkopf 20 aufgrund des sich auf der vorderen Kantenfläche abstützenden Vortastelementes 24 in Form der Vortastrolle weiter in Richtung des Pfeiles 25.

Sobald das rotierende Werkzeug 6 die in Fig. 6 dargestellte Arbeitsphase D erreicht hat, beginnt sich der Schlitten 19 der dritten Linearführung 17 entgegen der Werkzeugdurchlaufrichtung zu bewegen, während der Schienenschlitten 12 weiter in Richtung des Pfeiles an der zweiten Linearführung 10 nach oben gleitet.

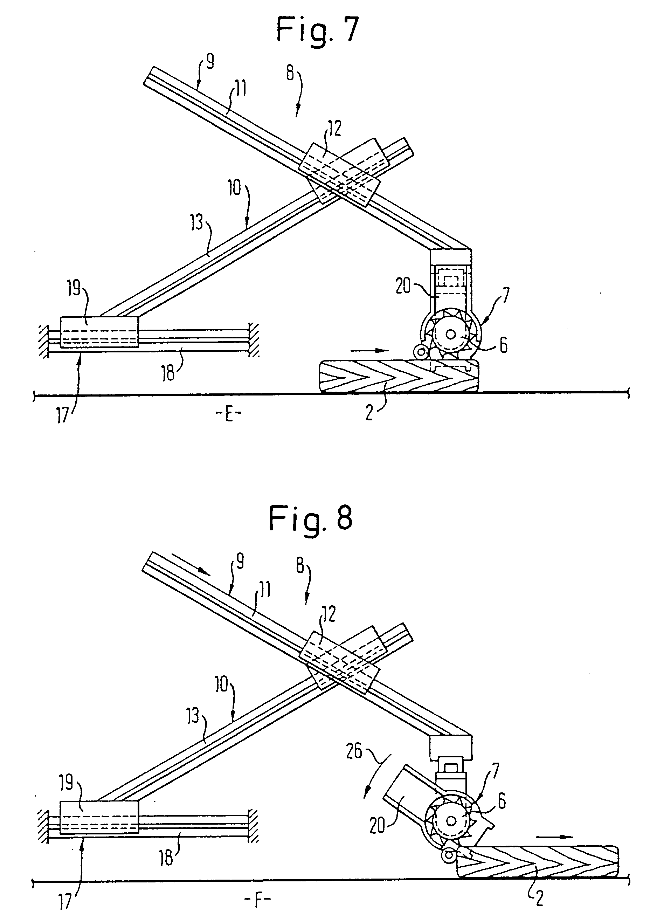

Hat das rotierende Werkzeug 6 dann die in Fig. 7 dargestellte Arbeitsphase E erreicht, wird die Verfahrbewegung des Schienenschlittens 12 auf der zweiten Linearführung 10 blockiert und der Schlitten 19 der dritten Linearführung 17 in seine Ausgangsstellung zurückgeführt. Im Verlaufe dieser Bewegung bearbeitet das rotierende Werkzeug 6 die Oberseite des Werkstückes 2 im Bereich des Kantenrandes.

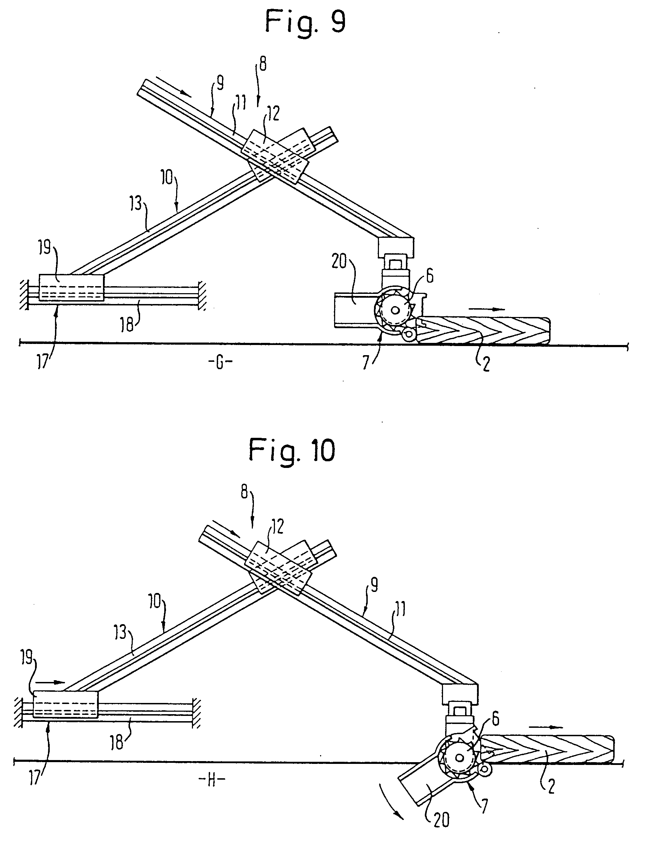

Gelangt nun das rotierende Werkzeug 6 in die in Fig. 8 dargestellte Arbeitsphase F im Bereich der hinteren Kantenfläche des Werkstückes 2, so wird der Schwenkkopf 20 aufgrund des Vortastelementes 24 weiter in Richtung des Pfeiles 26 verschwenkt. In dieser Arbeitsphase ist der Schlitten 19 auf der dritten Führungsschiene 18 und der Schienenschlitten 12 auf der zweiten Führungsschiene 13 blockiert und die erste Führungsschiene 11 der ersten Linearführung 9 freigegeben. Dadurch kann sich im weiteren Verlauf das rotierende Werkzeug im Bereich der hinteren Kantenfläche am Werkstück 2 nach unten bis in die in Fig. 9 dargestellte Arbeitsphase G bewegen.

Ist diese Arbeitsphase erreicht, wird die dritte Linearführung 17 wieder freigegeben, so daß der Schlitten 19 wieder in Werkstückdurchlaufrichtung bewegt werden kann. In dieser Phase ist der Schienenschlitten 12 auf der zweiten Linearführung 10 über die Blockiereinrichtung festgelegt.

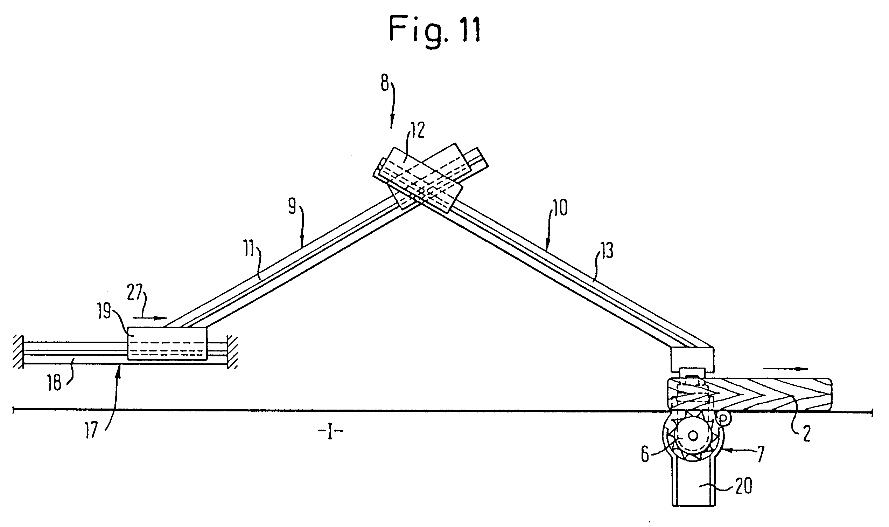

Sobald das rotierende Werkzeug die Unterseite des Werkstückes erreicht hat, wird auch die erste Linearführung 9 durch die Blockiereinrichtung festgelegt und der Schlitten 19 an der dritten Führungsschiene 18 in Werkstückdurchlaufrichtung verschoben, wie dies mit dem Pfeil 27 in Fig. 11 angedeutet ist. Je nach Verschiebegeschwindigkeit des Schlittens 19 kann das rotierende Werkzeug 6 einen gewissen Bereich der Unterseite des Werkstückes 2 bearbeiten, wie dies in Fig. 11 mit der Arbeitsphase I angedeutet ist.

Aufgrund der beschriebenen erfindungsgemäßen Arbeitsweise der Vorrichtung kann somit in einem Arbeitsgang die vordere Kantenfläche, die Oberseite und die hintere Kantenfläche eines plattenförmigen Werkstückes komplett in einem Durchgang mit einem rotierenden Werkzeug im Durchlauf bearbeitet werden. In einem nachgeschalteten Bearbeitungsvorgang ist es dann nur noch erforderlich, den Kantenrand des verbleibendenf Teils der Unterseite nachzuarbeiten, was mit einer einfachen Bearbeitungsvorrichtung in einem Durchgang ohne weiteres möglich ist.

Wie eingangs bereits erwähnt, ist im Falle des in den Fig. 1 und 2 dargestellten Ausführungsbeispiels die dritte Linearführung nicht vorgesehen. Aufgrund dessen ist es nicht möglich, mit dem rotierenden Werkzeug 6 in den Bereich der Unterseite des Werkstückes hineinzuarbeiten. Aus diesem Grund kann mit einer erfindungsgemäßen Vorrichtung nach den Fig. 1 und 2 lediglich ein Teil der vorderen Kantenfläche, der Kantenrand im Bereich der Oberseite und ein Teil der hinteren Kantenfläche des Werkstückes 2 bearbeitet werden.

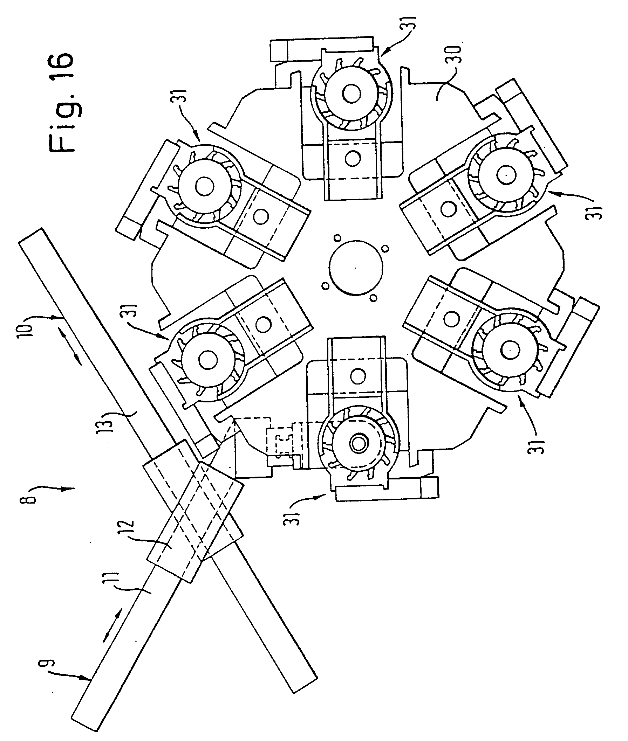

Wie im Zusammenhang mit den Patentansprüchen 22 bis 24 bereits beschrieben, kann die Werkzeuganordnung eine das bzw. die rotierenden Werkzeuge tragende Wechseleinheit aufweisen, die über eine Schnellwechselanordnung an der Werkzeuganordnung lösbar befestigt ist. Bei einer derartigen konstruktiven Ausgestaltung kann eine Auswechseleinrichtung vorgesehen werden, mit der das Auswechseln der jeweiligen Wechseleinheit automatisch vogenommen werden kann. Die Auswechseleinheit kann dabei in der verschiedensten Weise ausgestaltet sein. Bei dem in Fig. 16 dargestellten dritten Ausführungsbeispiel ist die Auswechseleinheit in Form einer Wechselscheibe 30 ausgebildet, die an ihrem Umfang sternförmig eine Anzahl derartiger Wechseleinheiten 31 trägt. Diese Wechseleinheiten 31 können über eine an sich bekannte Schrittschaltung dann jeweils wahlweise einzeln in die jeweilige Bearbeitungsstellung geschwenkt werden.

Wie eingangs bereits erwähnt, kann die Blockiereinrichtung zum Feststellen der jeweiligen Linearführung in der verschiedensten Weise ausgebildet sein. Eine besonders einfache Blockiereinrichtung für die zweite Linearführung 10 ist in dem in den Fig. 1 und 2 dargestellten ersten Ausführungsbeispiel angedeutet. Diese Blockiereinrichtung umfaßt den auf dem Schienenschlitten 12 angeordneten Höhenanschlag 15 und die am Oberdruck befestigten Anschlagleiste 16.

Bei der in Fig. 1 dargestellten Arbeitsphase bearbeitet das rotierende Werkzeug die vordere Kantenfläche des Werkstückes 2. Dabei gleitet der Schienenschlitten 12 an der zweiten Führungsschiene 13 der zweiten Linearführung 10 in Durchlaufrichtung des Werkstückes 2 nach oben. Diese Verschiebebewegung des Schienenschlittens 12 an der Führungsschiene 13 nach oben wird in der in Fig. 2 dargestellten Lage durch den Höhenanschlag 15 gestoppt, der an der Anschlagleiste 16 zur Anlage gelangt. Damit ist die Verschiebebewegung des Schienenschlittens 12 an der zweiten Führungsschiene 13 nach oben blockiert.

Die Befestigung der Anschlagleiste 16 am Oberdruck 5 hat zudem den Vorteil, daß der Verschiebeweg des Schienenschlittens 12 an der zweiten Führungsschiene 13 automatisch eingestellt wird. So wird der Oberdruck 5 jeweils entsprechend der Dicke des jeweils zu bearbeitenden Werkstückes 2 angehoben oder abgesenkt. Auf diese Weise wird automatisch die für die jeweilige Werkstückdicke zutreffende Anschlaglage festgelegt.

## Patentansprüche

1. Vorrichtung zur Bearbeitung der Kantenränder von fortlaufend bewegten plattenförmigen Werkstücken aus Holz, Kunststoff o. dgl., mittels einer auf den Kantenrand mit mindestens einem rotierenden Werkzeug (6) einwirkenden Werkzeuganordnung (7), deren Lage zum Kantenrand jeweils durch eine mit der Werkzeuganordnung verbundene, sich am Werkstück (2) abstützende Tastanordnung gesteuert wird, wobei die Werkzeuganordnung an einer Führungsanordnung (8) gehaltert ist, über die die Werkzeuganordnung in einer parallel zur Bewegungsrichtung der Werkstücke und im wesentlichen senkrecht zu deren Ober- bzw. Unterseite verlaufenden Ebene über einen begrenzten Weg verfahrbar ist,
dadurch gekennzeichnet,
daß die Führungsanordnung (8) eine erste Linearführung (9) umfaßt, deren Führungsrichtung schräg zur Bewegungsrichtung (2) der Werkstücke verläuft, und
daß die erste Linearführung (9) an einer zweiten Linearführung (10) parallel verfahrbar ist, deren Führungsrichtung die Führungsrichtung der ersten Linearführung (9) kreuzt und in bezug auf die Führungsrichtung der ersten Linearführung (9) entgegengesetzt schräg zur Bewegungsrichtung der Werkstücke (2) verläuft.

2. Vorrichtung nach Anspruch 1, dadurch gekennzeichnet, daß die Tastanordnung zwei mit der Werkzeuganordnung (7) verbundene Tastelemente aufweist, von denen sich das eine Tastelement (22) auf der seitlichen Kantenfläche und das andere Tastelement (23) auf der Oberseite, der Unterseite bzw. der in Bewegungsrichtung vorderen oder hinteren Kantenfläche des jeweiligen plattenförmigen Werkstückes (2) abstützt.

3. Vorrichtung nach Anspruch 1 oder 2, dadurch gekennzeichnet, daß lösbare Blockiereinrichtungen vorgesehen sind, über die die Verfahrbarkeit der Werkzeuganordnung (7) entlang der beiden Linearführungen (9, 10) steuerbar ist.

4. Vorrichtung nach Anspruch 1 oder 2, dadurch gekennzeichnet, daß Stelleinrichtungen an den Linearführungen vorgesehen sind, über die die Werkzeuganordnung (7) über die Linearführungen in vorwählbare Positionen stellbar ist.

5. Vorrichtung nach Anspruch 1 bis 4, dadurch gekennzeichnet, daß der Schrägungswinkel der ersten Linearführung (9) gegenüber der Bewegungsrichtung der Werkstücke 10° bis 60° beträgt.

6. Vorrichtung nach Anspruch 1 bis 4, dadurch gekennzeichnet, daß der Schrägungswinkel der ersten Linearführung (9) gegenüber der Bewegungsrichtung der Werkstücke 20° bis 50° beträgt.

7. Vorrichtung nach Anspruch 1 bis 4, dadurch gekennzeichnet, daß der Schrägungswinkel der ersten Linearführung (9) gegenüber der Bewegungsrichtung der Werkstücke 30° beträgt.

8. Vorrichtung nach Anspruch 1 bis 4, dadurch gekennzeichnet, daß der Schrägungswinkel der zweiten, entgegengesetzt gerichteten Linearführung (10) gegenüber der Bewegungsrichtung der Werkstücke 10° bis 60° beträgt.

9. Vorrichtung nach Anspruch 1 bis 4, dadurch gekennzeichnet, daß der Schrägungswinkel der zweiten, entgegengesetzt gerichteten Linearführung (10) gegenüber der Bewegungsrichtung der Werkstücke 20° bis 50° beträgt.

10. Vorrichtung nach Anspruch 1 bis 4, dadurch gekennzeichnet, daß der Schrägungswinkel der zweiten, entgegengesetzt gerichteten Linearführung (10) gegenüber der Bewegungsrichtung der Werkstücke 30° beträgt.

11. Vorrichtung nach einem oder mehreren der vorhergehenden Ansprüche, dadurch gekennzeichnet, daß die Schrägungswinkel der ersten und der zweiten Linearführung gleich sind.

12. Vorrichtung nach einem oder mehreren der vorhergehenden Ansprüche, dadurch gekennzeichnet,
daß die erste Linearführung (9) eine erste Führungsschiene (11) aufweist, an deren einem Ende die Werkzeuganordnung (7) befestigt ist,
daß die erste Führungsschiene (11) in einem Schienenschlitten (12) hin- und herverschiebbar gelagert ist,
und daß die zweite Linearführung (10) eine zweite Führungsschiene (13) aufweist, auf der der Schienenschlitten (12) zusammen mit der ersten Führungsschiene (11) in Parallelausrichtung hin- und herverschiebbar gelagert ist.

13. Vorrichtung nach Anspruch 3 und 12, dadurch gekennzeichnet, daß die Blockiereinrichtungen von einer ersten und einer zweiten Blockiereinrichtung gebildet sind, wobei die erste Blockiereinrichtung zum lösbaren Festlegen der Verschiebebewegung der Werkzeuganordnung (7) entlang der ersten Linearführung (9) und die zweite Blockiereinrichtung zum lösbaren Festlegen der Verschiebebewegung des Schienenschlittens (12) auf der zweiten Linearführung (10) vorgesehen ist.

14. Vorrichtung nach einem oder mehreren der vorhergehenden Ansprüche, dadurch gekennzeichnet, daß die Führungsanordnung (8) eine dritte Linearführung (17) umfaßt, über die die zweite Linearführung (10) in Parallelausrichtung über einen begrenzten Verschiebeweg in einer zur Bewegungsrichtung der Werkstücke (2) parallelen Richtung verschiebbar ist.

15. Vorrichtung nach einem oder mehreren der Ansprüche 1 bis 13, dadurch gekennzeichnet, daß die Führungsanordnung (8) eine dritte Linearführung umfaßt, über die die Werkzeuganordnung (7) gegenüber der ersten Linearführung (9) über einen begrenzten Verschiebeweg in einer zur Bewegungsrichtung der Werkstücke (2) parallelen Richtung verschiebbar ist.

16. Vorrichtung nach einem oder mehreren der Ansprüche 2 und 5 bis 10, dadurch gekennzeichnet, daß die Werkzeuganordnung (7) mit einem rotierenden Werkzeug (6) ausgestattet ist und das andere Tastelement (23) als Tastscheibe ausgebildet ist, die achsgleich mit der Werkzeugachse dicht neben dem rotierenden Werkzeug (6) angeordnet ist.

17. Vorrichtung nach einem oder mehreren der Ansprüche 1 bis 15, dadurch gekennzeichnet, daß die Werkzeuganordnung (7) einen das bzw. die rotierenden Werkzeuge tragenden Schwenkkopf (20) aufweist, der um eine senkrecht zur Bewegungsrichtung der Werkstücke und parallel zu deren Ober- bzw. Unterseite verlaufende Drehachse (21) schwenkbar ist.

18. Vorrichtung nach Anspruch 17, dadurch gekennzeichnet, daß die Drehachse (21) des Schwenkkopfes (20) in der Achse des rotierenden Werkzeuges (6) liegt.

19. Vorrichtung nach Anspruch 17 oder 18, dadurch gekennzeichnet, daß der Schwenkkopf (20) mit einem Vortastelement (24) ausgestattet ist, das sich im Abstand von dem anderen Tastelement (23) auf der Oberseite, der Unterseite bzw. der in Bewegungsrichtung vorderen oder hinteren Kantenfläche des jeweiligen plattenförmigen Werk- stückes abstützt.

20. Vorrichtung nach Anspruch 19, dadurch gekennzeichnet, daß das Vortastelement (24) als Vortastrolle ausgebildet ist.

21. Vorrichtung nach Anspruch 19 oder 20, dadurch gekennzeichnet, daß der Schwenkkopf (20) mit einer Dreheinrichtung ausgestattet ist, die das Vortastelement (24) jeweils in Anlage an der Oberseite, der Unterseite bzw. der in Bewegungsrichtung vorderen oder hinteren Kantenfläche hält.

22. Vorrichtung nach einem oder mehreren der vorhergehenden Ansprüche, dadurch gekennzeichnet, daß die Werkzeuganordnung (7) eine das bzw. die rotierenden Werkzeuge tragende Wechseleinheit (31) aufweist, die über eine Schnellwechselanordnung an der Werkzeuganordnung lösbar befestigt ist.

23. Vorrichtung nach Anspruch 22, dadurch gekennzeichnet, daß die Wechseleinheit (31) die Werkzeuglagerung, die Tastanordnung sowie ein Kupplungselement für den Werkzeugantrieb trägt.

24. Vorrichtung nach Anspruch 21 und 22, dadurch gekennzeichnet, daß die Wechseleinheit (31) einen Schwenkkopf (20) trägt.

25. Vorrichtung nach Anspruch 24, dadurch gekennzeichnet, daß der Schwenkkopf (20) über eine Übertragungseinrichtung mit der Dreheinrichtung verbunden ist.

26. Vorrichtung nach Anspruch 25, dadurch gekennzeichnet, daß die Übertragungseinrichtung eine Kupplungseinrichtung aufweist.

27. Vorrichtung nach Anspruch 22 oder 23, dadurch gekennzeichnet, daß eine Auswechseleinrichtung zum automatischen Auswechseln der Wechseleinheiten (31) vorgesehen ist.

28. Vorrichtung nach Anspruch 24, dadurch gekennzeichnet, daß die Auswechseleinrichtung als Wechselscheibe (30) ausgebildet ist, die an ihrem Umfang sternförmig angeordnet eine Anzahl von Wechseleinheiten (31) trägt, die über eine an sich bekannte Schrittschaltung wahlweise einzeln in eine Bearbeitungsstellung schwenkbar sind.

29. Vorrichtung nach einem oder mehreren der vorhergehenden Ansprüche, dadurch gekennzeichnet, daß an zumindest einer der Linearführungen eine weitere Werkzeuganordnung hin- und herverfahrbar gelagert ist.

30. Vorrichtung nach einem oder mehreren der vorhergehenden Ansprüche, dadurch gekennzeichnet, daß eine Abtasteinrichtung zur Dickenabtastung der Werkstücke vorgesehen ist.

## Claims

1. Apparatus for shaping the edges of continuously moving plate-like workpieces made of wood, plastic or the like, by means of a tool assembly (7) which acts on the edge with at least one rotating tool (6) and of which the position relative to the edge is controlled in each case by a feeler assembly connected to the tool assembly and supported on the workpiece (2), wherein the tool assembly is mounted oh a guide assembly (8) by which the tool assembly is movable over a limited distance in a plane running parallel to the direction of movement of the workpieces and essentially perpendicularly to the upper and lower sides thereof, characterised in that the guide assembly (8) includes a first linear guide (9) of which the direction of guiding runs obliquely to the direction of movement (2) of the workpieces, and in that the first linear guide (9) is movable parallel on a second linear guide (10) of which the direction of guiding crosses the direction of guiding of the first linear guide (9) and in relation to the direction of guiding of the first linear guide (9) runs in the opposite direction obliquely to the direction of movement of the workpieces (2).

2. Apparatus according to claim 1, characterised in that the feeler assembly comprises two feeler elements which are connected to the tool assembly (7) and of which one feeler element (22) is supported on the lateral edge surface and the other feeler element (23) is supported on the upper side or lower side or oh the front or rear edge surface of the respective plate-like workpiece (2) in the direction of movement.

3. Apparatus according to claim 1 or 2, characterised in that releasable locking devices are provided, by which the mobility of the tool assembly (7) along the two linear guides (9, 10) can be controlled.

4. Apparatus according to claim 1 or 2, characterised in that adjusting devices are provided on the linear guides, by which the tool assembly (7) can be adjusted over the linear guides to preselectable positions.

5. Apparatus according to claims 1 to 4, characterised in that the angle of inclination of the first linear guide (9) relative to the direction of movement of the workpieces is 10° to 60°.

6. Apparatus according to claims 1 to 4, characterised in that the angle of inclination of the first linear guide (9) relative to the direction of movement of the workpieces is 20° to 50°.

7. Apparatus according to claims 1 to 4, characterised in that the angle of inclination of the first linear guide (9) relative to the direction of movement of the workpieces is 30°.

8. Apparatus according to claims 1 to 4, characterised in that the angle of inclination of the second, oppositely directed linear guide (10) relative to the direction of movement of the workpieces is 10° to 60°.

9. Apparatus according to claims 1 to 4, characterised in that the angle of inclination of the second, oppositely directed linear guide (10) relative to the direction of movement of the workpieces is 20° to 50°.

10. Apparatus according to claims 1 to 4, characterised in that the angle of inclination of the second, oppositely directed linear guide (10) relative to the direction of movement of the workpieces is 30°.

11. Apparatus according to one or more of the preceding claims, characterised in that the angles of inclination of the first and second linear guides are the same.

12. Apparatus according to one or more of the preceding claims, characterised in that the first linear guide (9) comprises a first guide rail (11) to one end of which is fixed the tool assembly (7), in that the first guide rail (11) is mounted reciprocatably in a rail carriage (12), and in that the second linear guide (10) comprises a second guide rail (13) oh which the rail carriage (12) together with the first guide rail (11) is mounted reciprocatably in parallel alignment.

13. Apparatus according to claims 3 and 12, characterised in that the locking devices are formed by first and second locking devices, wherein the first locking device is provided for releasably fixing the sliding movement of the tool assembly (7) along the first linear guide (9) and the second locking device is provided for releasably fixing the sliding movement of the rail carriage (12) on the second linear guide (10).

14. Apparatus according to one or more of the preceding claims, characterised in that the guide assembly (8) includes a third linear guide (17) by which the second linear guide (10) is slidable in parallel alignment over a limited sliding distance in a direction parallel to the direction of movement of the workpieces (2).

15. Apparatus according to one or more of claims 1 to 13, characterised in that the guide assembly (8) includes a third linear guide by which the tool assembly (7) is slidable relative to the first linear guide (9) over a limited sliding distance in a direction parallel to the direction of movement of the workpieces (2).

16. Apparatus according to one or more of claims 2 and 5 to 10, characterised in that the tool assembly (7) is fitted with a rotating tool (6) and the other feeler element (23) is designed as a feeler disc which is arranged coaxially with the tool axis close beside the rotating tool (6).

17. Apparatus according to one or more of claims 1 to 15, characterised in that the tool assembly (7) comprises a pivot head (20) which carries the rotating tool or tools and which is pivotable about a pivot shaft (21) extending perpendicularly to the direction of movement of the workpieces and parallel to the upper or lower side thereof.

18. Apparatus according to claim 17, characterised in that the pivot shaft (21) of the pivot head (20) is located in the axis of the rotating tool (6).

19. Apparatus according to claim 17 or 18, characterised in that the pivot head (20) is fitted with a preliminary feeler element (24) which at a distance from the other feeler element (23) is supported on the upper side or lower side or on the front or rear edge surface of the respective plate-like workpiece in the direction of movement.

20. Apparatus according to claim 19, characterised in that the preliminary feeler element (24) is designed as a preliminary feeler roller.

21. Apparatus according to claim 19 or 20, characterised in that the pivot head (20) is fitted with a rotating device which keeps the preliminary feeler element (24) in each case in contact with the upper side or lower side or the front or rear edge surface in the direction of movement.

22. Apparatus according to one or more of the preceding claims, characterised in that the tool assembly (7) comprises a changing unit (31) which carries the rotating tool or tools and which is releasably attached to the tool assembly by a quick-change assembly.

23. Apparatus according to claim 22, characterised in that the changing unit (31) carries the tool mounting, the feeler assembly as well as a coupling element for the tool drive.

24. Apparatus according to claims 21 and 22, characterised in that the changing unit (31) carries a pivot head (20).

25. Apparatus according to claim 24, characterised in that the pivot head (20) is connected to the rotating device by a transmission device.

26. Apparatus according to claim 25, characterised in that the transmission device comprises a coupling device.

27. Apparatus according to claim 22 or 23, characterised in that an exchange device is provided for automatic exchange of the changing units (31).

28. Apparatus according to claim 24, characterised in that the exchange device is designed as a changing disc (30) which carries at its circumference, arranged in a star shape, a number of changing units (31) which are selectively individually pivotable into a shaping position by a stepping device known in the art.

29. Apparatus according to one or more of the preceding claims, characterised in that an additional tool assembly is mounted reciprocatably on at least one of the linear guides.

30. Apparatus according to one or more of the preceding claims, characterised in that a scanning device is provided for scanning the thickness of the workpieces.

## Revendications

1. Dispositif pour traiter les bords de pièces en forme de plaques en bois, matière synthétique ou similaires, déplacées en continu au moyen d'un agencement d'outil (7) agissant sur le bord par au moins un outil rotatif (6), la position de l'agencement d'outil par rapport au bord étant chaque fois contrôlée par un agencement palpeur s'appuyant sur la pièce (2) et relié à l'agencement d'outil, dans lequel l'agencement d'outil est maintenu sur un agencement de guidage (8) par l'intermédiaire duquel l'agencement d'outil peut être déplacé sur un parcours limité, dans un plan s'étendant parallèlement à la direction de déplacement de la pièce et essentiellement perpendiculaire à sa face supérieure ou à sa face inférieure,
caractérisé en ce que
l'agencement de guidage (8) comporte un premier guide linéaire (9) dont la direction de guidage s'étend obliquement par rapport à la direction de déplacement de la pièce (2), et
en ce que le premier guide linéaire (9) peut être déplacé parallèlement à un second guide linéaire (10) dont la direction de guidage croise la direction de guidage du premier guide linéaire (9) et s'étend obliquement par rapport à la direction de déplacement de la pièce (2), mais dans le sens opposé par rapport à la direction de guidage du premier guide linéaire (9).

2. Dispositif selon la revendication 1, caractérisé en ce que l'agencement palpeur présente deux éléments palpeurs reliés à l'agencement d'outil (7), dont un élément palpeur (22) s'appuie sur le chant latéral et l'autre élément palpeur (23) s'appuie sur la face supérieure, sur la face inférieure ou sur le chant situé en avant ou en arrière par rapport à la direction de déplacement de chaque pièce (2).

3. Dispositif selon la revendication 1 ou 2, caractérisé en ce qu'il est prévu des dispositifs de blocage libérables par lesquels l'aptitude au déplacement de l'agencement d'outil (7) le long des deux guides linéaires (9, 10) peut être contrôlée.

4. Dispositif selon la revendication 1 ou 2, caractérisé en ce que, sur les guides linéaires, sont prévus des dispositifs d'ajustement par lesquels l'agencement d'outil (7) peut être ajusté dans des positions présélectionnables le long des guides linéaires.

5. Dispositif selon les revendications 1 à 4, caractérisé en ce que l'angle d'obliquité du premier guide linéaire (9) par rapport à la direction de déplacement des pièces vaut de 10° à 60°.

6. Dispositif selon les revendications 1 à 4, caractérisé en ce que l'angle d'obliquité du premier guide linéaire (9) par rapport à la direction de déplacement des pièces vaut de 20° à 50°.

7. Dispositif selon les revendications 1 à 4, caractérisé en ce que l'angle d'obliquité du premier guide linéaire (9) par rapport à la direction de déplacement des pièces vaut 30°.

8. Dispositif selon les revendications 1 à 4, caractérisé en ce que l'angle d'obliquité du second guide linéaire (10) dirigé dans le sens opposé, par rapport à la direction de déplacement des pièces, vaut de 10° à 60°.

9. Dispositif selon les revendications 1 à 4, caractérisé en ce que l'angle d'obliquité du second guide linéaire (10) dirigé dans le sens opposé, par rapport à la direction de déplacement des pièces, vaut de 20° à 50°.

10. Dispositif selon les revendications 1 à 4, caractérisé en ce que l'angle d'obliquité du second guide linéaire (10) dirigé dans le sens opposé, par rapport à la direction de déplacement des pièces, vaut 30°.

11. Dispositif selon l'une ou plusieurs des revendications précédentes, caractérisé en ce que l'angle d'obliquité est identique pour le premier et le second guide linéaire.

12. Dispositif selon l'une ou plusieurs des revendications précédentes, caractérisé en ce que
le premier guide linéaire (9) présente un premier rail de guidage (11) à une extrémité duquel est fixé l'agencement d'outil (7),
en ce que le premier rail de guidage (11) est monté à déplacement en va-et-vient dans un chariot (12) de rail,
et en ce que le second guide linéaire (10) présente un second rail de guidage (13) sur lequel le chariot (12) de rail est monté à déplacement en va-et-vient, dans une orientation parallèle. avec le premier rail de guidage (11).

13. Dispositif selon les revendications 3 et 12, caractérisé en ce que les dispositifs de blocage sont formés par un premier et un second dispositif de blocage, dans lequel le premier dispositif de blocage est prévu pour la détermination libérable du parcours de coulissement de l'agencement d'outil (7) le long du premier guide linéaire (9), et le second dispositif de blocage est prévu pour la fixation libérable du parcours de coulissement du chariot (12) de rail sur le second guide linéaire (10).

14. Dispositif selon l une ou plusieurs des revendications précédentes, caractérisé en ce que l'agencement de guidage (8) comprend un troisième guide linéaire (17) par lequel le second guide linéaire (10) peut être déplacé, dans une orientation parallèle, sur un parcours de coulissement limité, dans une direction parallèle à la direction du déplacement des pièces (2).

15. Dispositif selon l'une ou plusieurs des revendications 1 à 13, caractérisé en ce que l'agencement de guidage (8) comprend un troisième guide linéaire par lequel l'agencement d'outil (7) peut être coulissé sur un parcours de coulissement limité par rapport au premier guide linéaire (9), dans une direction parallèle à la direction du déplacement des pièces (2).

16. Dispositif selon l'une ou plusieurs des revendications 2 et 5 à 10, caractérisé en ce que l'agencement d'outil (7) est équipé d'un outil rotatif (6), et l'autre élément palpeur (23) est configuré comme disque palpeur qui est disposé coaxialement à l'axe de l'outil, à proximité étroite de l'outil rotatif (6).

17. Dispositif selon l une ou plusieurs des revendications 1 à 15, caractérisé en ce que l'agencement d'outil (7) présente une tête pivotante (20) portant le ou les outils rotatifs, qui peut être pivotée autour d'un axe de rotation (21) s'étendant perpendiculairement à la direction de déplacement des pièces et parallèlement à leur face supérieure ou à leur face inférieure.

18. Dispositif selon la revendication 17, caractérisé en ce que l'axe de rotation (21) de la tête pivotante (20) est situé dans l'axe de l'outil rotatif (6).

19. Dispositif selon la revendication 17 ou 18, caractérisé en ce que la tête pivotante (20) est équipée d'un pré-élément palpeur (24) qui, à distance de l'autre élément palpeur (23), s'appuie sur la face supérieure, la face inférieure ou le chant situé en avant ou en arrière, par rapport à la direction de déplacement, de chaque pièce en forme de plaque.

20. Dispositif selon la revendication 19, caractérisé en ce que le pré-élément palpeur (24) est configuré comme pré-galet palpeur.

21. Dispositif selon la revendication 19 ou 20, caractérisé en ce que la tête pivotante (20) est équipée d'un dispositif de rotation qui maintient le pré-élément palpeur (24) chaque fois en appui contre la face supérieure, la face inférieure ou le chant qui est situé en avant ou en arrière par rapport la direction de déplacement.

22. Dispositif selon l'une ou plusieurs des revendications précédentes, caractérisé en ce que l'agencement d'outil (7) présente une unité d'échange (31) portant le ou les outils rotatifs, qui est fixée de manière libérable sur l'agencement d'outil, par l'intermédiaire d'un système d'échange rapide.

23. Dispositif selon la revendication 22, caractérisé en ce que l'unité d'échange (31) porte le logement pour les outils, l'agencement palpeur ainsi qu'un élément d'accouplement pour l'entraînement des outils.

24. Dispositif selon les revendications 21 et 22, caractérisé en ce que l'unité d'échange (31) porte une tête pivotante (20).

25. Dispositif selon la revendication 24, caractérisé en ce que la tête pivotante (20) est reliée au dispositif de rotation par l'intermédiaire d'un dispositif de transmission.

26. Dispositif selon la revendication 25, caractérisé en ce que le dispositif de transmission présente un dispositif d'accouplement.

27. Dispositif selon la revendication 22 ou 23, caractérisé en ce qu'un dispositif d'échange est prévu pour l'échange automatique des unités d'échange (31).

28. Dispositif selon la revendication 24, caractérisé en ce que le dispositif d'échange est configuré comme disque d'échange (30) qui porte plusieurs unités d'échange (31) disposées en étoile à sa périphérie, et qui peuvent être pivotées individuellement et au choix dans une position de travail, par l'intermédiaire d'un entraînement pas-à-pas en soi connue.

29. Dispositif selon l'une ou plusieurs des revendications précédentes, caractérisé en ce que, sur au moins un des guides linéaires, un second agencement d'outil est monté à déplacement en va-et-vient.

30. Dispositif selon l'une ou plusieurs des revendications précédentes, caractérisé en ce qu'un dispositif palpeur est prévu pour palper l'épaisseur des pièces.
